# EUROPEAN PATENT APPLICATION

(11) **EP 4 276 707 A1**
(43) Date of publication of application: **15.11.2023**
(21) Application number: 22173233.2
(22) Date of filing: 13.05.2022
(51) Int. Cl.: G06N 20/00, G05B 13/02, G05B 23/02

(54) **GENERATING TRAINING DATA TO TRAIN A MACHINE LEARNING MODEL APPLIED FOR CONTROLLING A PRODUCTION PROCESS**

(71) Applicant: Siemens Aktiengesellschaft, 80333 München (DE)
(72) Inventor: Frikha, Ahmed, 81549 München (DE); Chen, Haokun, 80809 München (DE); Krompaß, Denis, 81549 München (DE)
(74) Representative: Siemens Patent Attorneys

(57) **Abstract**

System (10) for generating training data to train a machine learning model (14) applied for a classification task in a production process (13.n) for manufacturing at least one workpiece and/or product, comprising a central server (11) and several local servers (12.1, 12.2, 12.k) configured to perform:
a. generating a central dataset (CD) comprising synthetic datapoints encoding values for a set of features and for a label assigned to each set of features,
b. transferring a copy of the central dataset (CD) to the several local servers (12.1, 12.2, 12.k),
c. at each of the local servers (12.1, 12.2, 12.k), optimizing the features and/or labels of every datapoint of the copy of the central dataset (DSk) by encoding knowledge contained in its process-specific dataset (PD1, PD2, PDk) into the features and/or labels of every datapoint resulting in a process-specific current distilled dataset,
d. at the central server (11), receiving a copy of the process-specific current distilled datasets from at least a subset of the local servers (12.1, 12.2, 12.k) and aggregating all current distilled datasets into a process-agnostic and distilled aggregated central dataset,
e. iterating the steps b-d by applying the aggregated central dataset as central dataset, until a terminating criterion is met,
f. providing the resulting aggregated central dataset (TD) as output and using it as input for training the machine learning model (14) for the production process (13.n).

## Description

The present disclosure relates to a computer-implemented method for generating training data to train a machine learning model used for a classification task in a production process for manufacturing at least one workpiece and/or product and a corresponding system. Further, the disclosure relates to a corresponding computer-implemented method for controlling a production process and a computer program product.

Artificial Intelligence ("AI") systems, such as machine learning models, are known from the prior art. The machine learning models are software programs whose behavior is learned from data instead of being explicitly programmed. The learning process is called "training" which requires plenty of data and significant computational resources. Thereby, the trained machine learning model solves a specific task for which it was trained, such as prediction of machine or process properties. Unlike conventional software, the learned behavior of the machine learning models highly depends on the data including parameters used during training, namely training data.

In industrial manufacturing there exist a high diversity of manufacturing scenarios. For example, for the same production process there can be used different machine types from many machine manufacturers. The same or similar production process may be performed in different production sites with different settings of the machines. Similarly, the wear of the tooling of the different machines as well as other production-related factors, e.g., changes in the manufacturing process, influence the distribution of the collected data. In result, the distribution of data recorded from the different machines can differ. Such shifts in the data distributions typically lead to a degradation of the performance of the machine learning model developed for a certain production process.

Even more, while machine learning models perform well on indomain data, i.e., data similar to the dataset they were trained with, e.g., data from the same production processes, operated with a same machine but from another manufacturer, they fail to generalize to out-of-domain data incurred by strong distribution shift, e.g., data from another production processes operated with the same machine. The distribution shift problem is also addressed by collecting data from the new distribution, e.g., from the new manufacturing machine, and labelling it, before training a new ML model or finetuning an existing ML model on it. This method has two drawbacks. First, in most cases only few labelled data are available, which are sampled randomly. The few data samples of a new unseen manufacturing scenario used to customize the adaptive learning model or even more used to customize an untrained learning model leads to a moderate performance of the model.

One approach to generalize a machine learning model to unseen out-of-domain data is to train the ML model on data from different manufacturing conditions, e.g., different machine types. This would allow to directly use this ML model on unseen data collected by unknown machine types without requiring any labelling or retraining. The problem here is, that data owners, e.g., manufacturing companies are unwilling to share their data in order to preserve data-privacy and knowhow, and possibly prevent reverse engineering. Such an approach accelerates the development of ML models, but usually requires high data transfer to the different data sources.

Therefore, it is the object of the present application to train the ML model on data from different manufacturing conditions, in such a way to directly use this model on unseen data collected by unknown production processes, e.g., using unknown machine types, without requiring any labelling or retraining in a fast and low memory consuming way while preserving the data-privacy.

This object is solved by the features of the independent claims. The dependent claims contain further developments of the invention.

A first aspect concerns a computer-implemented method for generating training data to train a machine learning model used for a classification task in a production process for manufacturing at least one workpiece and/or product, comprising:
a. on a central server, generating a central dataset comprising synthetic datapoints encoding values for a set of features and for a label assigned to each set of features,
b. transferring a copy of the central dataset to several local servers, wherein each local server stores a process-specific dataset collected at a local production process out of several local production processes, and the collected datasets of the local production processes having different data distributions,
c. at each of the local servers, optimizing the features and/or labels of every datapoint of the copy of the central dataset by encoding knowledge contained in its process-specific dataset into the features and/or labels of every datapoint resulting in a process-specific current distilled dataset,
d. at the central server, receiving a copy of the process-specific current distilled datasets from at least a subset of the local servers and aggregating all current distilled datasets into a process-agnostic distilled aggregated central dataset,
e. iterating the steps b-d by applying the aggregated central dataset as central dataset until a terminating criterion is met,
f. providing the resulting aggregated central dataset as output and using it as input for training the machine learning model for the production process.

The proposed method applies a federated learning approach on a dataset level instead of a model level. This is achieved by optimizing a set of synthetic datapoints instead of optimizing a machine learning model. By using the federated learning setting, the proposed method does not need direct access to the data of the different production processes, i.e., data domains, where each owner of the production process stores their private data on a local server. These local servers communicate with a central server that aggregates the information received from the different local servers in a secure manner, e.g., by aggregating them. Therefore, the proposed method preserves data-privacy.

The disadvantage of federated learning, i.e., sending a large dataset between the central server and each of local would be computationally expensive is overcome by encoding knowledge contained in its process-specific dataset into the features and/or labels of every datapoint resulting in a process-specific current distilled dataset. The distilled dataset has reduced size compared to the process-specific dataset. Therefore, the volume of data transferred on each iteration is significantly reduced. The distilled dataset synthesizes a small number of data points that do not need to come from the correct data distribution, but will, when given to the machine learning model as training data, approximate the model trained on the original data. Thus, the proposed method generates a distilled dataset, i.e., a small dataset that encodes the task knowledge, by incorporating a dataset distillation method. This method reduces costs and time since the new proposed method is faster and has a lower memory footprint.

In an embodiment the production process is a new production process, which is similar to the local production processes.

Similar means here, that the data collected at the new production process and the data collected at the local production processes have different distributions. E.g., the new process is performed by the same machine as in the local production process but manufactures another product and therefore data with a different data distribution is collected at the new process. Another example, the new production process manufactures the same product but applying a machine of another machine manufacturer, such that the data collected at the new production process have a different to that of the local production process.

In an embodiment the production process is one of the local production processes.

Using the resulting aggregated central dataset as input for training the machine learning model for the local production process results in an updated ML model for the local production process which provides better results even if the wear of the tooling has changed during operation time or a tool has been replaced by another tool.

In an embodiment the training is performed using the resulting aggregated central dataset and the process-specific dataset of the local process on the local server.

Such a combination of datasets for training the local production process emphasises the information on the specific features of the local production process in relation to the process-agnostic features in the resulting aggregated central dataset which optimizes the resulting trained ML model of the local production process.

In an embodiment the initial central dataset comprises datapoints of random values or comprises of a dataset of any of the local production processes or the production process or a distilled dataset of a subset of the local production processes.

This allows a variety of different starting datasets. A random dataset provides a uniform and unbiased data distribution with respect to the local or new production process. Applying a dataset of any of the local production processes or the production process or a distilled dataset accelerates to reach the termination criterion.

In a further embodiment the optimizing is performed by inputting the process-specific dataset and the copy of the central dataset into a dataset distillation algorithm.

Transferring a large dataset between a central server and each of the local servers would be computationally expensive. Optimizing the dataset by a dataset distillation algorithm reduces the amount of data which has to be sent and therefore reduces data transfer cost and reduces processing capacity in the local server and central server.

In an embodiment the aggregating is performed by averaging the features and/or labels of all current distilled datasets resulting in the aggregated central dataset.

The aggregated dataset alone does not reveal any information about the process-specific datasets of the different local production processes. The aggregation of the client-specific distilled datasets each of which is biased towards a specific data domain / production process yields a dataset that is domain-agnostic, i.e., is not biased towards a specific domain / production process.

In a further embodiment the feature of a datapoint is a parameter measured on at least one machine performing the production process or a parameter measured on at least one workpiece and/or product manufactured by the production process.

In an embodiment the feature of the datapoint comprises information of a feature map of an image of the production process.

The feature map of an image provides the information which is most distinguishing for object on the image. Datapoints comprising only the information of a feature map is of reduced volume compared to a dataset encoding the complete image.

In an embodiment the process-specific dataset of each local production process is private data, and the private data is not transferred to the central server.

In an embodiment the production processes are one of an additive manufacturing process or a milling process, and the classification task is one of anomaly detection, failure classification, condition monitoring of a machine in the production process, or a quality control, product sorting of the workpiece and/or product manufactured in the production processes.

A second aspect concerns a computer-implemented method for controlling a production process for manufacturing at least one workpiece and/or product, comprising:
- training a machine learning model to perform a classification task in the production process with an aggregated central dataset generated according to claims 1-10,
- inputting datapoints collected during the production process into the trained machine learning model,
- outputting a classification result of the production process from the trained machine learning model depending on the input datapoints, and
- controlling the production process depending on the classification result.

The machine learning model trained by the aggregated central dataset provides a high performance with respect to the quality of the classification result without or with only few training data of the production process it is applied to. The high performance of the trained ML model and accuracy of the output classification result, e.g., failure class of the product, e.g., to adapt the parameter setting of the production process and/or the machine performing the production process.

The trained ML model has not only a high domain generalization ability but uses the aggregated central dataset which is a distilled cross-domain dataset that encodes the knowledge contained in process-specific dataset from the different local production processes that were used for training. This aggregated central dataset can be useful to reduce engineering efforts for the development of different data-driven applications beyond the task at hand, e.g., applications that require continual learning properties or neural architecture search. The advantage is cost reduction and/or performance increase via the reuse of the distilled cross-domain dataset, i.e., the aggregated central dataset.

In an embodiment the classification task is one of anomaly detection, failure classification, condition monitoring of a machine in the production process, or a quality control, product sorting of the workpiece and/or product manufactured in the production processes.

A third aspect concerns a system for generating training data to train a machine learning model applied for a classification task in a production process for manufacturing at least one workpiece and/or product, comprising a central server and several local servers configured to perform:
a. generating a central dataset comprising synthetic datapoints encoding values for a set of features and for a label assigned to each set of features,
b. transferring a copy of the central dataset to the several local servers, wherein each local server stores a process-specific dataset collected(measured) at one local production process out of several local production processes, and the collected datasets of the local production processes having different data distributions,
c. at each of the local servers, optimizing the features and/or labels of every datapoint of the copy of the central dataset by encoding knowledge contained in its process-specific dataset into the features and/or labels of every datapoint resulting in a process-specific current distilled dataset,
d. at the central server, receiving a copy of the process-specific current distilled datasets from at least a subset of the local servers and aggregating all current distilled datasets into a process-agnostic and distilled aggregated central dataset,
e. iterating the steps b-d by applying the aggregated central dataset as central dataset, until a terminating criterion is met,
f. providing the resulting aggregated central dataset as output and using it as input for training the machine learning model for the production process.

The system provides the aggregated central dataset for training the ML method in a fast, processing capacity and data bandwidth efficient way.

A fourth aspect concerns a computer program product directly loadable into the internal memory of a digital computer, comprising software code portions for performing the steps as described before, when said product is run on said digital computer.

The computer program product can be provided by a computer readable memorv medium having computer program instructions stored thereon, which perform the steps of the method according to the preceding claims when executed by a processor.

The invention will be explained in more detail by reference to accompanying figures. Similar objects will be marked by the same reference signs.
- Figure 1: schematically illustrates an embodiment of the inventive system.
- Figure 2: shows an embodiment of the inventive method for generating training data illustrated by a schematic information flow diagram.
- Figure 3: shows an embodiment of the inventive method for controlling a production process illustrated by a schematic information flow diagram.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor or firmware, and/or by a combination of dedicated hardware and firmware and software. It is further noted that each functional step of the method can be performed at a functional unit on the related system.

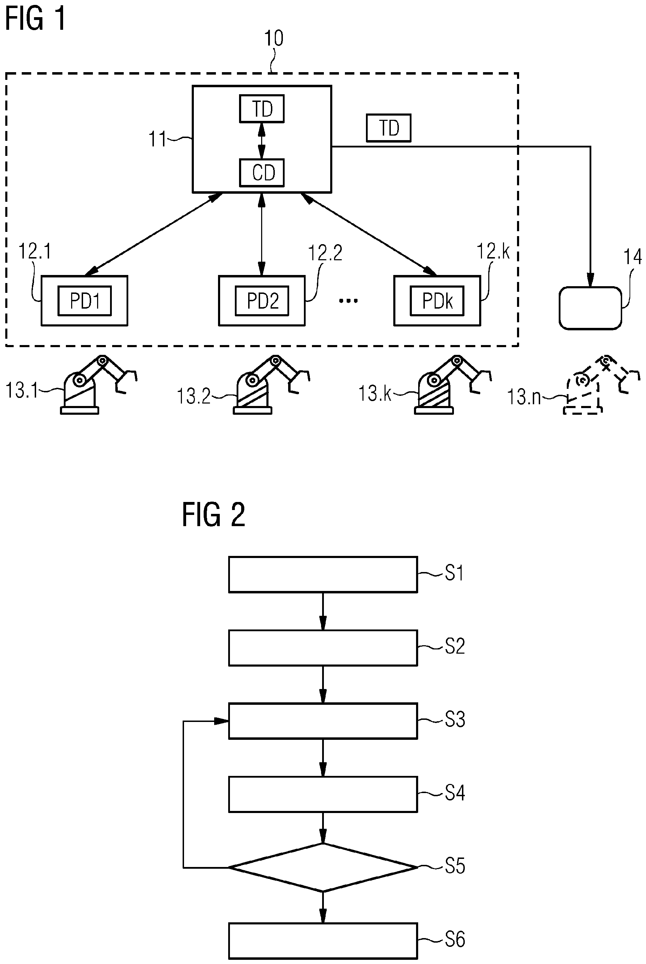

Figure 1 shows a system 10 which is configured to perform the inventive method, i.e., to generate training data TD to train a machine learning model 14 used for a classification task in a production process 13.n for manufacturing at least one workpiece and/or product.

The system 10 comprises of one central server 11 and several local servers 12.1, 12.2, 12.k. Each of the local servers 12.1, 12.2, 12.k comprises a data interface to communicate with the central server 10 and a storage unit that stores a process-specific dataset PD1, PD2, PDk collected at a local production process 13.1, 13.2, 13.k. The process-specific dataset PD1, PD2, PDk of each local production process 13.1, 13.2, 13.k is private data, i.e., owned by different customers, and the private data as such is not transferred to the central server 11 throughout the method steps performed by the system.

In industrial manufacturing there exist a high diversity of manufacturing scenarios. For example, in a production process there can be used different machine types from many machine manufacturers. Local production processes are such variations of the production process. Data collected from the several local production processes have different data distributions. Data or collected data from the local production process 13.1, 13.2, 13.k are sensor data recorded over time by sensors measuring physical parameters, e.g., torque, rotation speed, temperature, pressure, voltage and the same, during a production process or image data from the work piece captured by a camera.

A datapoint of the dataset comprises a feature and a label assigned to the feature. The feature comprises a set of different sensor data measured at a certain point in time or period of time. The label indicates a class characterizing the production process or the machine performing the production process, or the workpiece manufactured by the production process at the time the datapoint was recorded. Examples of classes are normal/failure mode, maintenance required mode related or failure A, failure B, failure C of the. Labelling or labelled data is used as synonym for annotating or annotated data in this description.

The central server 11 is configured to generate in an initial step a central dataset CD comprising synthetic datapoints. In a federated learning approach performed in cooperation of the central server and the several local servers the synthetic datapoints are iteratively optimized and finally the central server 11 outputs an aggregated central dataset TD, which is used as training data to train a machine learning model 14 applied for a classification task in a production process 13.n for manufacturing at least one workpiece and/or product.

The local production processes 13.1, 13.2, 13.k as well as the production process 13.n for which a ML model shall be trained are processes at which datasets are collected which are of the same structure, but which show a different data distribution. The local production processes 13.1, 13.2, 13.k as well as the production process 13.n are preferably one of an additive manufacturing process or a milling process. The classification task is one of anomaly detection, failure classification, condition monitoring of a machine in the production process, or a quality control, product sorting of the workpiece and/or product manufactured in the production processes.

An embodiment of the inventive method which is performed by the central server 11 and each of the local servers 12.1, 12.2, 12.k is illustrated in Figure 2 and comprises the following steps.

In a first step S1, the central dataset DS is generated by the central server 11. The central dataset DS comprises synthetic datapoints encoding values for a set of features and for a label assigned to each set of features. The central dataset CD comprises datapoints of random values or a dataset of any of the local production processes or the production process or a distilled dataset of a subset of the local production processes PD1, PD2, PDk.

In the next step S2, a copy of the central dataset DS is transferred to each of the local servers 12.1, 12.2, 12.k. At each of the local servers 12.1, 12.2, 12.k, the features and/or labels of every datapoint of the copy of the central dataset CD are optimized by encoding knowledge contained in its process-specific dataset PD1, PD2, PDk into the features and/or labels of every datapoint resulting in a process-specific current distilled dataset, see step S3. The optimizing is performed by inputting the process-specific dataset and the copy of the central dataset CD into a dataset distillation algorithm, which outputs the process-specific current distilled dataset. Examples of possible dataset distillation algorithms and techniques are published under
https://arxiv.org/abs/1811.10959,
https://arxiv.org/abs/2006.05929,
https://arxiv.org/abs/2110.04181 or
https://arxiv.org/abs/2107.13034

In a variant only the features of the process-specific dataset PD1, PD2, PDk are optimized, and the labels remain unchanged. The feature of a datapoint is a parameter measured on at least one machine performing the production process or a parameter measured on at least one workpiece and/or product manufactured by the production process. The feature of the datapoint can encode a feature map of an image, which provides the information which is most distinguishing for object on the image. The current distilled dataset is sent back from each of the local servers 12.1, 12.2, 12.k to the central server 11.

The central server 11 receives a copy of the process-specific current distilled datasets from each of the local servers 12.1, 12.2, 12.k and aggregates all distilled datasets into a process-agnostic and distilled aggregated central dataset, see step S4. Preferably, the aggregating is performed by averaging the features and/or labels of all current distilled datasets resulting in the aggregated central dataset. The aggregation of the process-specific distilled datasets, each of which is biased towards a specific data domain, yields a dataset that is domain-agnostic, i.e., is not biased towards a specific production process.

In step S5 the current aggregated central dataset is compared to a terminating criterion and further communication rounds are conducted until a terminating criterion is met. The terminating criteria can be one of a predefined convergence criterion, a predefined number of iterations, a predefined time limit and the like. If the terminating criterion is not matched, the aggregated central dataset is applied as central dataset and the steps S2 to S4 are performed again. I.e., in each round a copy of the previous central dataset is substituted by the current distilled aggregated central dataset and sent from the central server 11 to each of the local servers 12.1, 12.2, 12.k. The data distillation algorithm optimizes the distilled aggregated central dataset with the process-specific dataset PD1, PD2, PDk resulting in a "new" current distilled aggregated central dataset. The "new" current distilled aggregated central datasets are sent back from the local servers 12.1, 12.2, 12.k to the central server 11, which aggregates all "new" current distilled datasets into a process-agnostic and "new" distilled aggregated central dataset. If the "new" distilled aggregated central dataset complies the terminating criterion at step S5 the "new" current distilled aggregated central dataset is output and used as input for training the machine learning model 14 for the production process 13.n.

An algorithm of this method is illustrated in pseudo code as follows. Here, a scenario is considered where each different manufacturing condition is a manufacturing machine with a different type that generates data from a specific domain and saves it on a client k, which is the local server k. In the pseudocode, N denotes the number of the training iterations and *N_{Com}* the number of communication rounds.

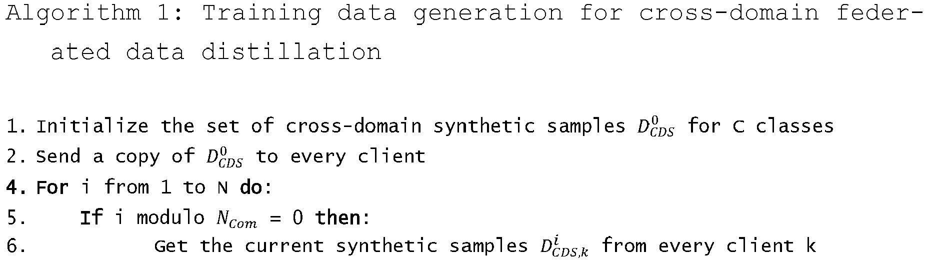

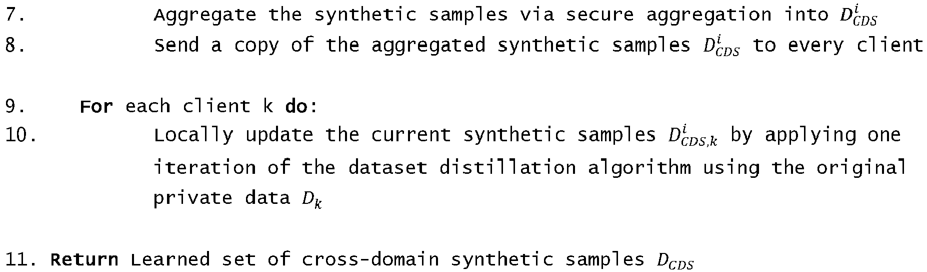

In step 10, a dataset distillation algorithm is applied. In the following we provide the pseudo code for a simple and high performing dataset distillation algorithm that was published recently (https://arxiv.org/pdf/2110.04181.pdf).

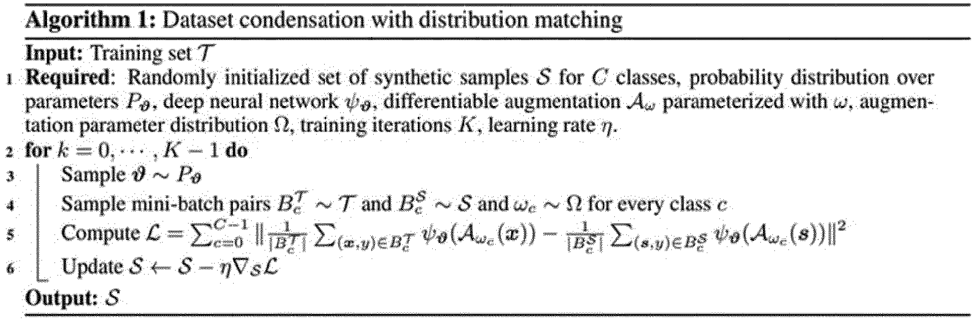

After the convergence of the method in step S5, i.e., the optimization/learning of the resulting aggregated central dataset TD, which is a distilled cross-domain dataset, this resulting aggregated central dataset TD is used to train the ML model for the production process 14, see step S6.

The production process can be a new production process, which is similar to the local production processes. Alternatively, the production process is one of the local production processes 13.1, 13.2, 13.k, wherein the training is performed using the resulting distilled aggregated central dataset TD and the process-specific dataset PD1, PD2, PDk of the local process 13.1, 13.2, 13.k on the local server 12.1, 12.2, 12.k.

The output of the described method is not only the resulting aggregated central dataset TD but also the trained ML model using the resulting aggregated central dataset as training data. The machine learning model can be a deep learning model, e.g., a deep autoencoder. But the generated distilled aggregated central dataset can be used to train any machine learning model including SVM, decision trees, boosting methods, and furthermore.

In fact, this resulting distilled aggregated central dataset TD encompasses task-related knowledge from different data domains and can therefore be used during the development of other data-driven application beyond the task at hand. Examples of other applications of related tasks include pretraining of a deep learning model, continual learning, neural architecture search and hyperparameter tuning.

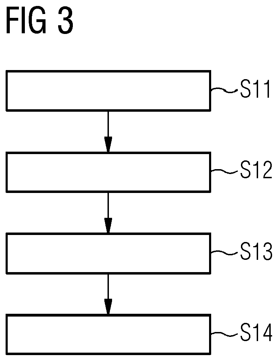

Another aspect of the invention concerns a method for controlling a production process for manufacturing at least one workpiece and/or product. The ML model and the production process are those as describe above and illustrated in Fig. 1 and Fig.2. This method is illustrated by an information flow diagram in Fig. 3.

In a first step S11 of the method a machine learning model 14 is trained to perform a classification task in the production process 13.n with an aggregated central dataset generated by the method as described above, see also Fig.2. In a second step S12 datapoints collected during the production process 13.n are input into the trained machine learning model 14, which outputs a classification result of the production process 13.n depending on the input datapoints, see step S13. Subsequently the production process is controlled depending on the classification result.

In order to apply our method to a new production process 13.n, it is assumed that its collected data contains the same features as the process-specific datasets. In industrial manufacturing, these features are usually recorded using a reasonable set of sensors (including cameras), which measures for example the torques of the various axes in a milling machine, as well as control deviations. The collected dataset has to be annotated and pre-processed with the same preprocessing steps applied to the process-specific datasets present on the local servers, which was used for dataset distillation. The model application in a new manufacturing scenario consists in deploying the trained ML model, see step S6, in production mode, i.e., it directly makes predictions on the live data. The live data from, e.g., the new machine type Mi. A classifier model is initialized with the domain-agnostic parameters θ^* found during model training, see step S6. Class probabilities for the live data are predict with the model θ^*.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Computer-implemented method for generating training data to train a machine learning model (14) used for a classification task in a production process (13.n) for manufacturing at least one workpiece and/or product, comprising:
a. on a central server (11), generating (S1) a central dataset (CD) comprising synthetic datapoints encoding values for a set of features and for a label assigned to each set of features,
b. transferring (S2) a copy of the central dataset (CD) to several local servers (12.1, 12.2, 12.k), wherein each local server (12.1, 12.2, 12.k) stores a process-specific dataset (PD1, PD2, PDk) collected at a local production process (13.1, 13.2, 13.k) out of several local production processes, and the collected datasets (PD1, PD2, PDk) of the local production processes having different data distributions,
c. at each of the local servers (12.1, 12.2, 12.k), optimizing (S3) the features and/or labels of every datapoint of the copy of the central dataset (CD) by encoding knowledge contained in its process-specific dataset (PD1, PD2, PDk) into the features and/or labels of every datapoint resulting in a process-specific current distilled dataset,
d. at the central server (11), receiving (S4) a copy of the process-specific current distilled datasets from at least a subset of the local servers (12.1, 12.2, 12.k) (12.1, 12.2, 12.k) and aggregating all current distilled datasets into a process-agnostic and distilled aggregated central dataset,
e. iterating (S5) the steps b-d by applying the distilled aggregated central dataset as central dataset until a terminating criterion is met,
f. providing (S6) the resulting aggregated central dataset (TD) as output and using it as input for training the machine learning model (14) for the production process (13.n).

2. Method according to claim 1, wherein the production process (13.n) is a new production process, which is similar to the local production processes (13.1, 13.2, 13.k).

3. Method according to claim 1 or 2, wherein the production process (13.n) is one of the local production processes (13.1, 13.2, 13.k).

4. Method according claim 3, wherein the training is performed using the resulting aggregated central dataset (TD) and the process-specific dataset (PD1, PD2, PDk) of the local process (13.1, 13.2, 13.k) on the local server (12.1, 12.2, 12.k) .

5. Method according to any of the preceding claims, wherein the initial central dataset (CD) comprises datapoints of random values or comprises of a dataset (PD1, PD2, PDk) of any of the local production processes (13.1, 13.2, 13.k) or a distilled dataset of a subset of the local production processes (13.1, 13.2, 13.k).

6. Method according to any of the preceding claims, wherein the optimizing is performed by inputting the process-specific dataset (PD1, PD2, PDk) and the copy of the central dataset (CD) into a dataset distillation algorithm.

7. Method according to any of the preceding claims, wherein the aggregating is performed by averaging the features and/or labels of all current distilled datasets resulting in the aggregated central dataset.

8. Method according to any of the preceding claims, wherein the feature of a datapoint is a parameter measured on at least one machine performing the production process (13.1, 13.2, 13.k, 13.n) or a parameter measured on at least one workpiece and/or product manufactured by the production process.

9. Method according to any of the preceding claims, wherein the feature of the datapoint comprises information of a feature map of an image of the production process (13.1, 13.2, 13.k, 13.n).

10. Method according to any of the preceding claims, wherein the process-specific dataset (PD1, PD2, PDk) of each local production process (13.1, 13.2, 13.k) is private data and the private data is not transferred to the central server (11).

11. Method according to any of the preceding claims, wherein the production processes (13.1, 13.2, 13.k, 13,n) are one of an additive manufacturing process or a milling process, and the classification task is one of anomaly detection, failure classification, condition monitoring of a machine in the production process (13.1, 13.2, 13.k, 13.n), or a quality control, product sorting of the workpiece and/or product manufactured in the production processes (13.1, 13.2, 13.k, 13.n).

12. Computer-Implemented method for controlling a production process (13.n) for manufacturing at least one workpiece and/or product, comprising:
- training (S11) a machine learning model (14) to perform a classification task in the production process (13.n) with an aggregated central dataset (TD) generated according to claims 1-11,
- inputting (S12) datapoints collected during the production process (13.n) into the trained machine learning model (14),
- outputting (S13) a classification result of the production process (13.n) from the trained machine learning model (14) depending on the input datapoints, and
- controlling (S14) the production process (13.n) depending on the classification result.

13. Method according to claim 12, wherein the classification task is one of anomaly detection, failure classification, condition monitoring of a machine in the production process, or a quality control, product sorting of the workpiece and/or product manufactured in the production processes.

14. System (10) for generating training data to train a machine learning model (14) applied for a classification task in a production process (13.n) for manufacturing at least one workpiece and/or product, comprising a central server (11) and several local servers (12.1, 12.2, 12.k) configured to perform:
a. generating a central dataset (CD) comprising synthetic datapoints encoding values for a set of features and for a label assigned to each set of features,
b. transferring a copy of the central dataset (CD) to the several local servers (12.1, 12.2, 12.k), wherein each local server (12.1, 12.2, 12.k) stores a process-specific dataset (PD1, PD2, PDk) collected at a local production process (13.1, 13.2, 13.k) out of several local production processes, and the collected datasets (PD1, PD2, PDk) of the local production processes having different data distributions,
c. at each of the local servers (12.1, 12.2, 12.k), optimizing the features and/or labels of every datapoint of the copy of the central dataset (DSk) by encoding knowledge contained in its process-specific dataset (PD1, PD2, PDk) into the features and/or labels of every datapoint resulting in a process-specific current distilled dataset,
d. at the central server (11), receiving a copy of the process-specific current distilled datasets from at least a subset of the local servers (12.1, 12.2, 12.k) and aggregating all current distilled datasets into a process-agnostic and distilled aggregated central dataset,
e. iterating the steps b-d by applying the aggregated central dataset as central dataset, until a terminating criterion is met,
f. providing the resulting aggregated central dataset (TD) as output and using it as input for training the machine learning model (14) for the production process (13.n).

15. A computer program product directly loadable into the internal memory of a digital computer, comprising software code portions for performing the steps of claims 1-11 when said product is run on said digital computer is running on said computer
